**Europäisches Patentamt**

**European Patent Office**

**Office européen des brevets**

(19)

(11) Veröffentlichungsnummer: **0 388 996**

**A1**

# EUROPÄISCHE PATENTANMELDUNG

(21) Anmeldenummer: **90108039.0**

(22) Anmeldetag: **02.05.87**

(51) Int. Cl.5: **B01D 46/10, B05B 15/12**

(30) Priorität: **23.10.86 DE 3635988**

(43) Veröffentlichungstag der Anmeldung:
**26.09.90 Patentblatt 90/39**

(60) Veröffentlichungsnummer der früheren
Anmeldung nach Art. 76 EPÜ: **0 264 531**

(84) Benannte Vertragsstaaten:
**DE**

(71) Anmelder: **Dürr GmbH**
**Spitalwaldstrasse 18**
**D-7000 Stuttgart 40(DE)**

(72) Erfinder: **Küchenthal, Gunther**
**Glemsstrasse 12**
**D-7140 Ludwigsburg(DE)**
Erfinder: **Röckle, Bernhard**
**Im Brühl 53**
**D-7250 Leonberg-Eltingen(DE)**

(74) Vertreter: **Hoeger, Stellrecht & Partner**
**Uhlandstrasse 14 c**
**D-7000 Stuttgart 1(DE)**

(54) **Filterelement für eine Filterdecke einer Lackspritzanlagenkabine.**

(57) Die Erfindung betrifft ein Filterelement für eine Filterdecke einer Lackspritzanlagenkabine, welches einen rechteckigen Metallprofilrahmen aufweist, dessen eine Durchlassöffnung definierende Rahmenschenkel in das Rahmeninnere hinein vorspringende, ungefähr horizontale Auflageflansche besitzen, auf denen ein rechteckiges Gitter aufliegt, das eine sich ebenso wie das Gitter über die Durchlassöffnung erstreckende Filtermatte trägt, die durch an den Rahmenschenkeln um horizontale Achsen schwenkbar angebrachte und auf die Filtermatte herabschwenkbare Klemmschienen niedergehalten und im Rahmen eingespannt wird, wobei die Klemmschienen in ihrem gegen die Filtermatte anliegenden Bereich einen Querschnitt, der einem abgerundeten, dem Rahmeninnern zu offenen Haken gleicht.

## FILTERELEMENT FÜR EINE FILTERDECKE EINER LACKSPRITZANLAGENKABINE

Die Erfindung betrifft ein Filterelement für eine Filterdecke einer Lackspritzanlagenkabine, welches einen rechteckigen Metallprofilrahmen aufweist, dessen eine Durchlassöffnung definierende Rahmenschenkel in das Rahmeninnere hinein vorspringende, ungefähr horizontale Auflageflansche besitzen, auf denen ein rechteckiges Gitter aufliegt, das eine sich ebenso wie das Gitter über die Durchlassöffnung erstreckende Filtermatte trägt, die durch an den Rahmenschenkeln um horizontale Achsen schwenkbar angebrachte und auf die Filtermatte herabschwenkbare Klemmschienen niedergehalten und im Rahmen eingespannt wird.

Die Decke des eigentlichen Kabinenraums einer Lackspritzanlagenkabine ist üblicherweise über ihre ganze Breite als sogenannte Filterdecke ausgeführt. Sie besteht in der Regel aus rechteckigen Filterelementen, deren Umfang von einem Rahmen gebildet wird, und die Rahmen einander benachbarter Filterelemente sind mittels Schraubverbindungen aneinander befestigt. Die Länge dieser rechteckigen Filterelemente entspricht meist ungefähr der Kabinenbreite, die z.B. 6 m betragen kann, während die sich in Kabinenlängsrichtung erstreckende Breite der Filterelemente z.B. 1 m beträgt.

Beispielsweise aus von der Anmelderin erstellten Lackspritzanlagen sind Filterelemente der eingangs erwähnten Art bekannt, deren Rahmen von verzinkten Stahlprofilen gebildet werden, die einen ungefähr C-förmigen Querschnitt besitzen, wobei sich das C dem Rahmeninnern zu öffnet und einen im Vergleich zu seinem oberen Schenkel ungefähr doppelt bis dreifach so breiten unteren Schenkel besitzt, der den das Gitter und die Filtermatte tragenden Flansch bildet. Bei dem Gitter handelt es sich um ein verzinktes Stahldrahtgitter, dessen Randbereiche auf die erwähnten Flansche der Rahmenschenkel aufgeschweisst sind. Auf die Innenseite des vertikal verlaufenden Rückens eines jeden Rahmenschenkels ist eine im Querschnitt umgekehrt L-förmige Tragwinkelschiene aufgeschweisst, an deren dem Rahmeninnern zugewandte freie Längskante eine Klemmschiene so angelenkt ist, dass sie sich um eine horizontale, in Längsrichtung des betreffenden Rahmenschenkels verlaufende Achse schwenken lässt. Bei dieser Klemmschiene handelt es sich gleichfalls um eine Stahlwinkelschiene mit umgekehrt L-förmigem Querschnitt, die im heruntergeschwenkten Zustand mit der Tragwinkelschiene einen im Querschnitt umgekehrt U-förmigen Kanal bildet und infolge ihres Eigengewichts die Filtermatte zwischen sich und dem erwähnten Flansch des betreffenden Rahmenschenkels einklemmt. Um die Klemmschiene hochschwenken zu können, ist auf ihre dem Rahmeninnern zugekehrte Seite ein bügelförmiger Griff aufgeschweisst, der bei hochgeschwenkter Klemmschiene gegen den vertikalen Rücken des Rahmenschenkels so anliegt, dass der Klemmschienenschwerpunkt in Richtung auf das Rahmeninnere neben der Klemmschienenschwenkachse liegt. Deshalb müssen Sicherungsriegel vorgesehen werden, um bei einem Filtermattenwechsel ein unbeabsichtigtes Herabfallen der Klemmschienen zu verhindern.

Bei diesen bekannten Filterelementen stört das durch die Klemmschienen bedingte Unfallrisiko, aber auch das hohe Gewicht der Filterelemente.

Der Erfindung lag die Aufgabe zugrunde, die geschilderten bekannten Filterelemente so zu verbessern, dass das Verletzungsrisiko beim Auswechseln der Filtermatten verringert wird, und ausgehend von einem Filterelement der eingangs erwähnten Art lässt sich diese Aufgabe erfindungsgemäss dadurch lösen, dass die Klemmschienen in ihrem gegen die Filtermatte anliegenden Bereich einen Querschnitt aufweisen, der einem abgerundeten, dem Rahmeninnern zu offenen Haken gleicht. Eine erfindungsgemäss ausgebildete Klemmschiene hat also anstelle einer verhältnismässig schmalen Kante, wie sie die als Klemmschiene dienende Stahlwinkelschiene des bekannten Filterelements besitzt, einen stark abgerundeten unteren Bereich, welcher zu einer drastischen Verringerung des Verletzungsrisikos beim Auswechseln der Filtermatte führt; hinzu kommt, dass sich die Griffe, wie sie an den Klemmschienen des bekannten Filterelements vorhanden sind, einsparen lassen, da die erfindungsgemäss ausgebildeten Klemmschienen vom Rahmeninnern her erfassbare Griffmulden bilden.

Zu einer noch vollkommeneren Lösung der gestellten Aufgabe führt die Maßnahme, die Klemmschienen als stranggepresste Aluminiumprofilschienen auszubilden. Durch das Strangpressen lässt sich den Klemmschienen ohne Erhöhung der Herstellungskosten nahezu jedes beliebige Profil geben, und ausserdem wird durch die Verwendung von Aluminium im Vergleich zu den schweren, von Stahlwinkelschienen gebildeten Klemmschienen des bekannten Filterelements das Gewicht der Klemmschienen drastisch verringert. Durch die Erfindung ergibt sich also ein leichteres und einfach herzustellendes Filterelement.

Besonders vorteilhaft sind Ausführungsformen, bei denen die Schwenkachse der Klemmschienen einen solchen Querabstand von dem betreffenden Rahmenschenkel aufweist, dass der Schwerpunkt der hochgeschwenkten, gegen den zugehörigen Rahmenschenkel anliegenden Klemmschiene - in der Draufsicht - zwischen der Schwenkachse und dem Rahmenschenkel liegt, so dass die im Zusammenhang mit der Schilderung des bekannten Filterelements beschriebenen Sicherungsriegel für die Klemmschienen entfallen können, was zu einer weiteren Kosteneinsparung führt. Diese Gestaltung lässt sich besonders einfach bei stranggepressten Klemmschienen erzielen, weil das Strangpressen eine freie Gestaltung des Klemmschienenquerschnitts erlaubt.

Desweiteren wird empfohlen, die Klemmschienen so zu dimensionieren und ihre Schwenkachsen so anzuordnen, dass die Rahmenschenkel die hochgeschwenkten Klemmschienen nach oben überragen und oben eine Trittfläche zum Begehen des Rahmens bilden. Bei einer solchen Ausführungsform kann ein Monteur, der die Filtermatte auswechseln muss, die Rahmen vermittels der Trittflächen bequem begehen.

Wenn die dem Rahmeninnern zugewandte Fläche der hochgeschwenkten Klemmschiene in Richtung nach unten und innen geneigt ist, so erleichtert diese Schrägfläche das Einlegen der Filtermatte in den Rahmen.

Um das Gewicht des Filterelements noch weiter zu reduzieren und seine Herstellung zu vereinfachen, wird empfohlen, auch die Rahmenschenkel als stranggepresste Aluminiumprofilschienen auszubilden; da, wie bereits erwähnt, das Strangpressen ohne Erhöhung der Herstellungskosten praktisch jede beliebige Querschnittsform zulässt, empfiehlt es sich dann desweiteren, in die die Rahmenaussenseiten bildenden Flächen der stranggepressten Rahmenschenkel jeweils zwei im Querschnitt halbkreisförmige Längsnuten zum Einlegen von Dichtschnüren für eine Abdichtung zwischen einander benachbarten Filterelementen einzuziehen.

Weitere Merkmale, Vorteile und Einzelheiten der Erfindung ergeben sich aus den beigefügten Ansprüchen und/oder aus der nachfolgenden Beschreibung sowie der beigefügten zeichnerischen Darstellung mehrerer bevorzugter Ausführungsformen des erfindungsgemässen Filterelements; in der Zeichnung zeigen:

Fig. 1 - einen Vertikalschnitt durch eine Spritzkabine senkrecht zur Längsrichtung einer Lackspritzanlage zur Erläuterung der Anordnung einer Filterdecke;

Fig. 2 - einen Längsschnitt durch die Spritzkabine entsprechend der Linie 2-2 in Fig. 1;

Fig. 3 - den Ausschnitt "A" aus Fig. 2 in grösserem Maßstab als in dieser Figur, u.z. zur Darstellung einer ersten besonders vorteilhaften Ausführungsform des erfindungsgemässen Filterelements;

Fig. 4 - eine der Fig. 3 entsprechende Darstellung einer zweiten Ausführungsform des erfindungsgemässen Filterelements;

Fig. 5 - eine jeweils einer Hälfte der Figuren 3 und 4 entsprechende Darstellung einer dritten bevorzugten Ausführungsform des erfindungsgemässen Fiterelements, und

Fig. 6 - eine der Fig. 4 entsprechende Darstellung einer vierten, besonders vorteilhaften Ausführungsform.

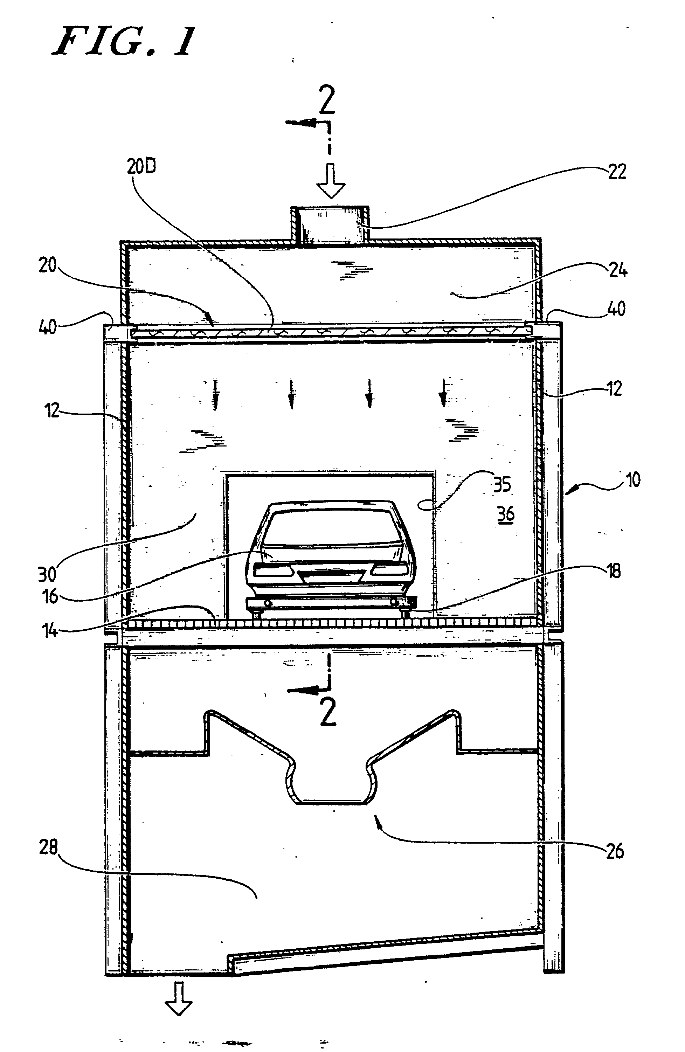

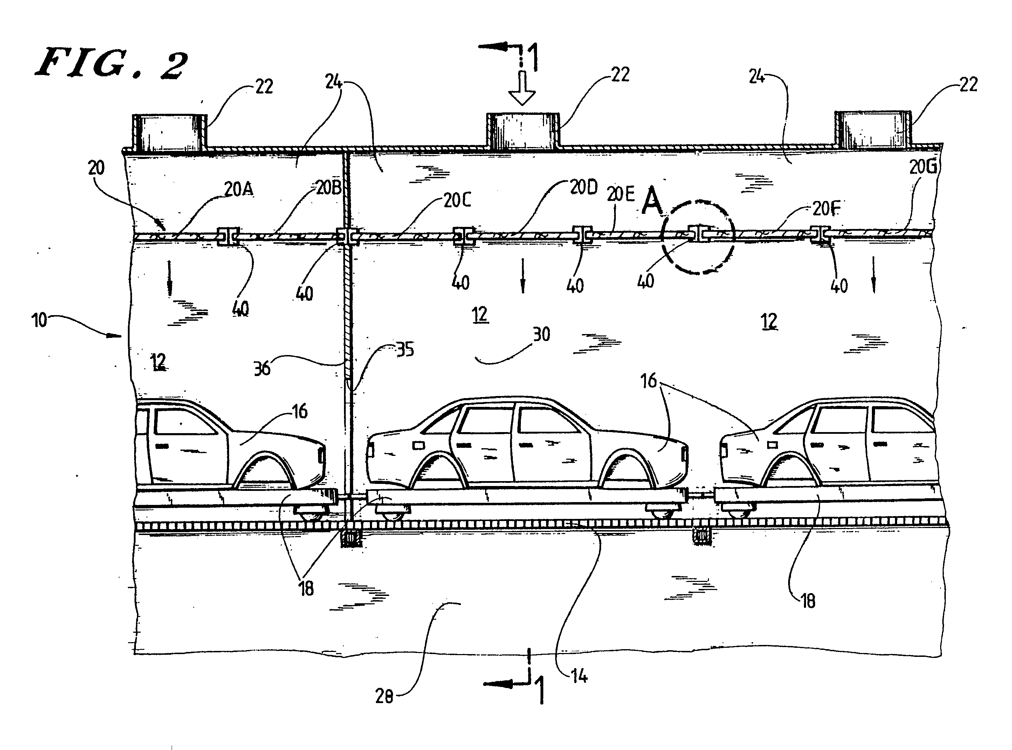

Die Figuren 1 und 2 zeigen eine als Ganzes mit 10 bezeichnete Spritzkabine mit Seitenwänden 12, einem Gitterrostboden 14, über den in Längsrichtung der Lackspritzanlage Fahrzeugkarosserien 16 auf Schienen-geführten Schlitten 18 transportiert werden, einer Filterdecke 20, welche eine mit Lufteinlassöffnungen 22 versehene Zuluftkammer 24 nach unten begrenzt, einer als Ganzes mit 26 bezeichneten Abluft-Waschvorrichtung und einer Abluftkammer 28. Über die Filterdecke 20 wird der Arbeitsraum 30 der Spritzkabine 10 gleichmässig mit den Arbeitsraum von oben nach unten durchströmender Luft beschickt.

Zwischen einzelnen Abschnitten der Spritzkabine 10 befinden sich Zwischenwände 36, die mit Durchlassöffnungen 35 für die Karosserien 16 versehen sind.

Wie die Fig. 2 erkennen lässt, ist die Filterdecke 20 aus in Längsrichtung der Spritzkabine hintereinander angeordneten selbsttragenden Filterelementen 20A, 20B .....20G etc. zusammengesetzt, die sich jeweils über die ganze Breite der Spritzkabine 10 erstrecken und in Längsrichtung der Spritzkabine stumpf aneinanderstossen, wobei sie in noch näher zu beschreibender Weise miteinander verschraubt sind.

Die Strömungsrichtung der Luft durch die Spritzkabine 10 hindurch wurde in den Figuren 1 und 2 durch Pfeile angedeutet.

Insoweit entspricht die Spritzkabine dem Stand der Technik.

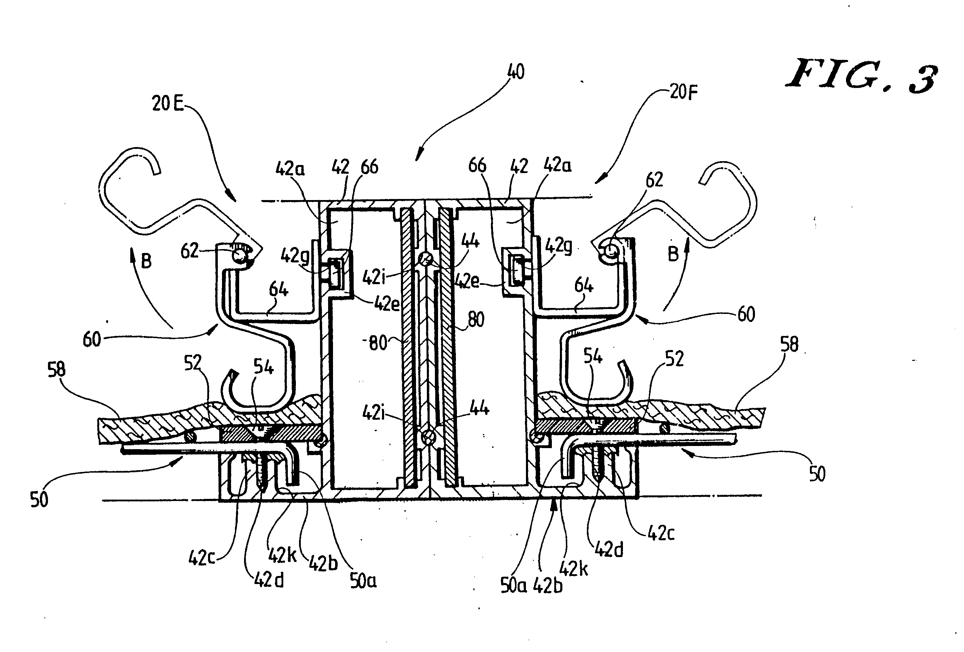

Im folgenden soll nun die in Figur 3 gezeigte erste Ausführungsform des in den Figuren 1 und 2 mit 40 bezeichneten Metallprofilrahmens näher erläutert werden.

Dieser ist aus vier rechtwinklig gegeneinander stossenden Rahmenschenkeln 42 zusammengesetzt, die durch Ablängen einer stranggepressten Aluminiumprofilschiene gewonnen werden. Diese Profilschiene besitzt erfindungsgemäss ein kastenförmiges Hohlprofil 42a mit einem angeformten unteren Tragflansch 42b. Letzterer hat vorteilhafterweise ein ungefähr W-förmiges Profil mit einer in einen Mittelsteg 42c eingezogenen Längsnut 42d. Ferner ist in die Aluminiumprofilschiene unter Bildung eines inneren Stegs 42e eine T-Nut 42g eingezogen.

Schliesslich sind in die die Rahmenaussenseite bildende Fläche der Aluminiumprofilschiene zwei im Querschnitt halbkreisförmige Längsnuten 42i eingezogen, um zwischen gegeneinander anliegende Rahmenschenkel 42 einander benachbarter Filterelemente 20E und 20F Dichtungsschnüre 44 einlegen zu können.

Erfindungsgemäss können einander benachbarte Filterelemente über eine quer verlaufende Verbindungsschiene und Schrauben aneinander befestigt werden, die in eine Längs nut, welche in die Aluminiumprofilschiene eingezogen ist, eingeschraubt werden und zweckmässigerweise als selbstschneidende Schrauben ausgebildet sind.

Ein verzinktes Stahldrahtgitter 50 wird auf die Tragflansche 42b der vier Rahmenschenkel 42 eines Metallprofilrahmens 40 aufgelegt, wobei es sich empfiehlt, die Randbereiche 50a des Gitters 50 nach unten umzubiegen und in eine nach oben offene Nut 42k einzusetzen, die vom jeweiligen Tragflansch 42b gebildet wird. Dann werden auf die Ränder des Gitters 50 vier Spannleisten 52 aufgelegt und mit Schrauben 54 befestigt, bei denen es sich gleichfalls um selbstschneidende Schrauben handelt, die einfach in die Längsnuten 42d eingedreht werden können; auf diese Weise lässt sich das Stahldrahtgitter 50 zwischen den vier Tragflanschen 42b und den vier Spannleisten 52 festklemmen. Nachdem bei der in Figur 3 gezeigten Ausführungsform die Randbereiche 50a des Gitters 50 von den Nuten 42k der Rahmenschenkel 42 abschirmend aufgenommen werden, wäre es an sich nicht erforderlich, die Gitterränder mit den Spannleisten 52 abzudecken, so dass es bei dieser Ausführungform auch möglich wäre, für die Schrauben 54 anstelle der Spannleisten 52 nur einfache Unterlegscheiben oder dergleichen vorzusehen, um das Gitter 50 sicher an den Tragflansch 42b zu befestigen.

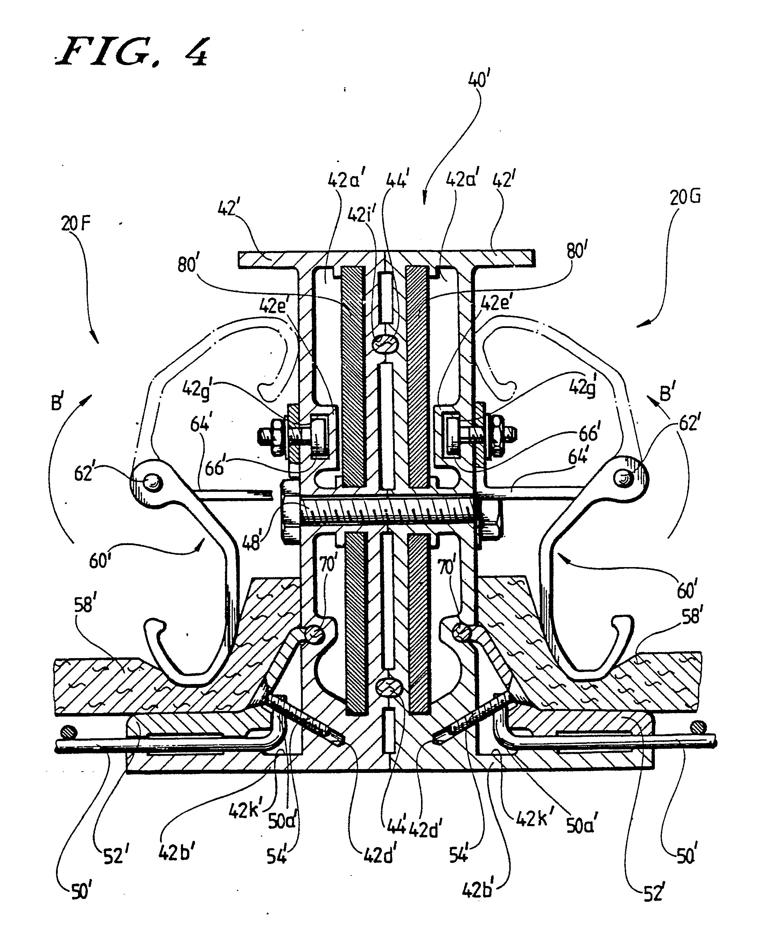

Schliesslich wird auf das Gitter 50 eine ggf. mehrteilige Filtermatte 58 aufgelegt, die sich erfindungsgemäss zumindest nahezu bis zur inneren Seitenwand des Hohlprofils 42a aller vier Rahmenschenkel 42 erstreckt und vorzugsweise an jeder Seite des Metallprofilrahmens 40 durch eine Klemmschiene 60 festgehalten wird, die erfindungsgemäss als stranggepresste Aluminiumprofilschiene ausgebildet ist und aus ihrer in Fig. 3 gezeigten wirksamen Position in Richtung des Pfeils B um ein Gelenk 62 hochgeschwenkt werden kann, um die Filtermatte 58 auszutauschen. Erfindungsgemäss hat die Klemmschiene 60 einen Querschnitt in Form eines stark gerundeten Hakens. Sie wird von einer im Querschnitt vorteilhafterweise U-förmigen Tragschiene 64 gehalten, an der das Gelenk 62 und Nutsteine 66 befestigt sind, welch letztere sich in die T-Nut 42g einschieben lassen, ehe man die Rahmenschenkel 42 zum Rahmen 40 zusammenfügt. Erfindungsgemäss ist nun die Klemmschiene 60 so gestaltet, dass ihr Schwerpunkt zwischen dem Gelenk 62 und dem Hohlprofil 42a liegt (in der Draufsicht gesehen), wenn die Klemmschiene nach dem Hochschwenken über ihre in Fig. 3 strichpunktiert dargestellte Stellung hinaus ihre unwirksame Stellung einnimmt (sh. Figuren 4 bis 6). Im heruntergeschwenkten Zustand klemmt sie jedoch die Filtermatte 58 zwischen sich und der betreffenden Spannleiste 52 ein.

Die in Fig. 4 dargestellte Ausführungsform soll nun nur insoweit beschrieben werden, als sie von der in Fig. 3 dargestellten ersten Ausführungsform abweicht, wobei für einander entsprechende Teile dieselben Bezugszeichen verwendet wurden, jedoch unter Hinzufügung eines Strichs bei den Elementen der Ausführungsform nach Fig. 4.

Bei dieser Ausführungsform hat die Spannleiste 52' erfindungsgemäss die Gestalt einer Winkelschiene, u.z. bildet ihr Querschnitt einen stumpfen Winkel. Sie stützt sich (ebenso wie bei der Ausführungsform nach Fig. 3) mit ihrer dem Hohlprofil 42a' zugewandten Längskante an einer Dichtungsschnur 70' ab, die in eine eingezogene Nut der Aluminiumprofilschiene eingelegt ist. Da die Spannleiste 52' auch bei dieser Ausführungsform jeweils einen Randbereich 50a' des Stahldrahtgitters 50' abdeckt, wurde der Randbereich 50a' bei dieser Ausführungsform nach oben umgebogen. Zur Befestigung gegeneinanderstossender Rahmenschenkel 42' einander benachbarter Metallprofilrahmen 40' aneinander dienen sich durch diese Rahmenschenkel hindurcherstreckende Gewindebolzen 48'.

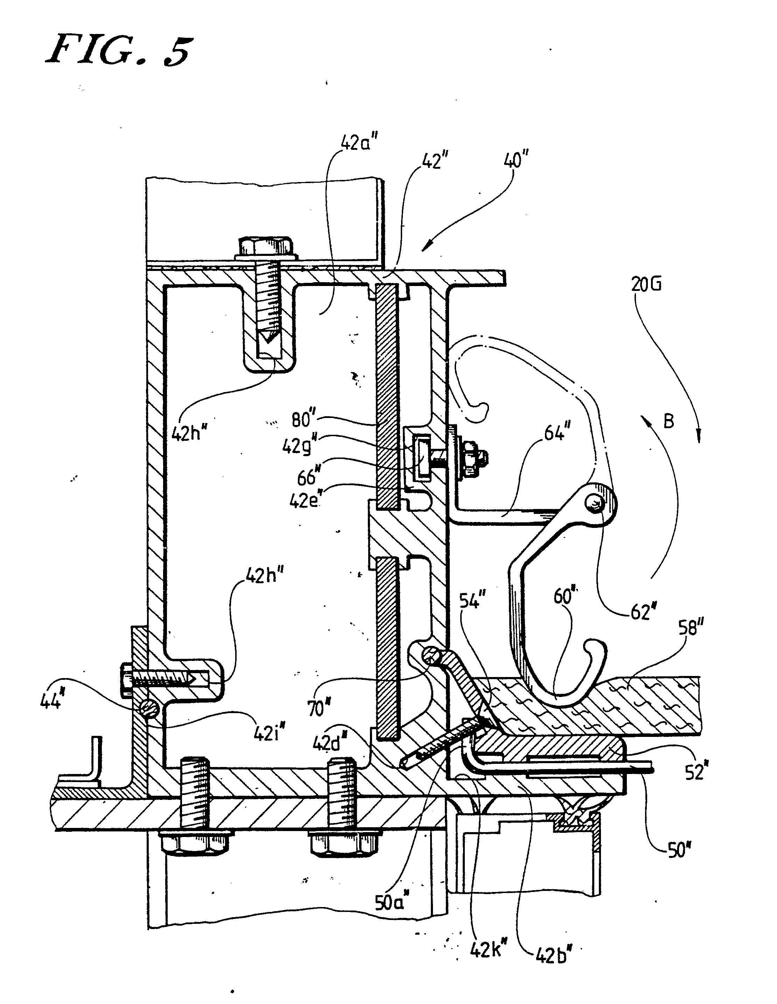

Auch die in Fig. 5 gezeigte dritte Ausführungsform bedarf nur noch insoweit einer Erläuterung, als darauf hinzuweisen ist, dass für die der Ausführungsform nach Fig. 3 entsprechenden Elemente dieselben Bezugszeichen wie in Fig. 3 verwendet worden sind, jedoch unter Hinzufügung zweier Striche. Die Fig. 5 lässt erkennen, dass in die die Rahmenschenkel 42" bildenden Aluminiumprofilschienen Längsnuten 42h" an nahezu beliebigen Stellen eingezogen werden können, wo sie für die Befestigung der Filterelemente an anderen Bauelementen der Spritzkabine zweckdienlich sind.

Schliesslich sei noch erwähnt, dass auf der Innenseite der Hohlprofile 42a bzw. 42a' bzw. 42a" beim Strangpressen an die Hohlprofilwände beliebige Haltenuten angeformt werden können, die dem Halten von Aussteifungsleisten 80 bzw. 80' bzw. 80" dienen - bei den letzteren kann es sich um Stahlblechleisten handeln, die vor dem Zusammenfügen des Rahmens 40 bzw. 40' bzw. 40" in die Rahmenschenkel 42 bzw. 42' bzw. 42" eingeschoben werden.

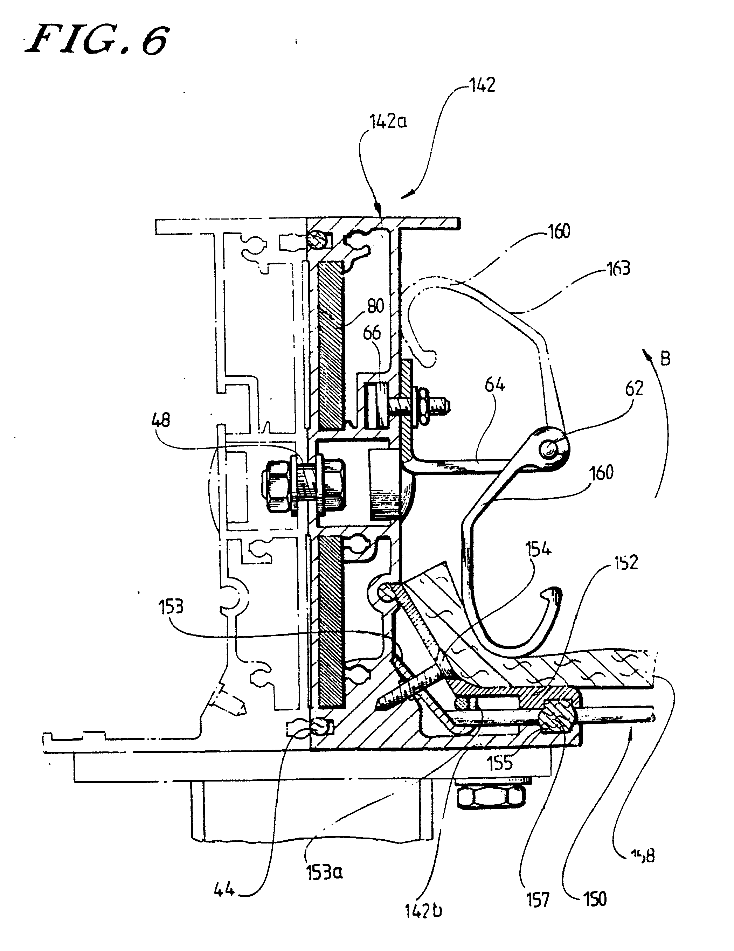

Die besonders vorteilhafte Ausführungsform nach Figur 6 wird ebenfalls nur insoweit beschrieben, als sie nach den vorstehenden Ausführungen erläuterungsbedürftig ist.

Weitere vorteilhafte Merkmale der Erfindung sind also in Folgendem zu sehen:

Die Rahmenschenkel werden von stranggepressten Aluminiumprofilschienen mit Gewindeelemente haltenden Aussparungen gebildet, und es sind von den Gewindeelementen niedergehaltene Spannelemente zum Einspannen des Gitters zwischen diesen und den Flanschen vorgesehen.

Beim Werkstoff für die Rahmenschenkel handelt es sich zweckmässigerweise um eine der üblichen Aluminiumlegierungen, natürlich kommen aber auch andere Leichtmetalllegierungen in Frage, die sich strangpressen lassen. Bei den in den Rahmenschenkeln vorgesehenen Aussparungen handelt es sich vorteilhafterweise um eingezogene T-Nuten, in die mit Gewindebolzen versehene Nutensteine eingesetzt werden; diese Gewindebolzen können dann nämlich durch Öffnungen des Gitters hindurchragen, so dass sich mit Unterlegscheiben und Muttern das Gitter an den Rahmenschenkeln befestigen lässt. In die Rahmenschenkel werden desweiteren zweckmässigerweise Nuten eingezogen, in die vor der Befestigung des Gitters dessen Kanten eingeschoben werden, so dass von den letzteren kein Verletzungsrisiko mehr ausgehen kann. Noch vorteilhafter ist es jedoch, wenn als Spannelemente von den Gewindeelementen niedergehaltene, sich längs der Rahmenschenkel erstreckende Spannleisten verwendet werden, die die Ränder bzw. die Kanten des Gitters abdecken. Auch dient es der Verringerung des Herstellungsaufwands, wenn als Gewindeelemente insbesondere selbstschneidende Schrauben verwendet werden, was bei einer Aluminiumprofilschiene ohne weiteres möglich ist. Besonders vorteilhaft ist es, wenn in die Rahmenschenkel als Aussparungen für die Gewindeelemente Längsnuten eingezogen werden, in die sich die Schrauben oder dergleichen einfach eindrehen lassen.

Durch die Verwendung stranggepresster Aluminiumprofilschienen für die Rahmenschenkel werden einfache Befestigungsmöglichkeiten für der Befestigung des Gitters und der Klemmschienen sowie der Montage der Metallprofilrahmen aneinander sowie an anderen Teilen dienende Elemente eröffnet, vor allem dadurch, dass beim Strangpressen in die Aluminiumprofilschienen Nuten für Gewindebolzen tragende Nutensteine und selbstschneidende Schrauben eingezogen werden. Dies gilt vor allem für die Befestigung von Schwenklagern für die Klemmschienen, so dass es besonders vorteilhaft ist, wenn jeder Rahmenschenkel eine sich dem Nutgrund zu erweiternde, eingezogene Längsnut zum Halten von Nutensteinen aufweist, an denen Träger für die an den letzteren angelenkten Klemmschienen befestigt sind. Auf diese Weise erübrigt sich das Anschweissen von Tragwinkelschienen, wie dies bei dem geschilderten bekannten Filterelement der Fall ist.

## Ansprüche

1. Filterelement für eine Filterdecke einer Lackspritzanlagenkabine, welches einen rechteckigen Metallprofilrahmen aufweist, dessen eine Durchlassöffnung definierende Rahmenschenkel in das Rahmeninnere hinein vorspringende, ungefähr horizontale Auflageflansche besitzen, auf denen ein rechteckiges Gitter aufliegt, das eine sich ebenso wie das Gitter über die Durchlassöffnung erstreckende Filtermatte trägt, die durch an den Rahmenschenkeln um horizontale Achsen schwenkbar angebrachte und auf die Filtermatte herabschwenkbare Klemmschienen niedergehalten und im Rahmen eingespannt wird, **dadurch gekennzeichnet**, dass die Klemmschienen (60) in ihrem gegen die Filtermatte (58) anliegenden Bereich einen Querschnitt aufweisen, der einem abgerundeten, dem Rahmeninnern zu offenen Haken gleicht.

2. Filterelement nach Anspruch 1, dadurch gekennzeichnet, dass die Klemmschienen (60) als stranggepresste Aluminiumprofilschienen ausgebildet sind.

3. Filterelement nach Anspruch 1 oder 2, dadurch gekennzeichnet, dass die Schwenkachsen (62) der Klemmschienen (60) jeweils einen solchen Querabstand von dem betreffenden Rahmenschenkel (42) aufweisen, dass der Schwerpunkt einer hochgeschwenkten, gegen den zugehörigen Rahmenschenkel anliegenden Klemmschiene -in der Draufsicht - zwischen ihrer Schwenkachse und diesem Rahmenschenkel liegt.

4. Filterelement nach einem oder mehreren der Ansprüche 1 bis 3, dadurch gekennzeichnet, dass die Klemmschienen (160) so dimensioniert und ihre Schwenkachsen (62) so angeordnet sind, dass die Rahmenschenkel (142) die hochgeschwenkten Klemmschienen nach oben überragen und oben eine Trittfläche (142a) zum Begehen des Rahmens (40) bilden.

5. Filterelement nach einem oder mehreren der Ansprüche 1 bis 4, dadurch gekennzeichnet, dass die dem Rahmeninnern zugewandte Fläche (163) der hochgeschwenkten Klemmschiene (160) in Richtung nach unten und innen geneigt ist.

6. Filterelement nach einem oder mehreren der vorstehenden Ansprüche, dadurch gekennzeichnet, dass auch die Rahmenschenkel (42) als stranggepresste Aluminiumprofilschienen (42a, 42b) ausgebildet sind, in deren die Rahmenaussenseiten bildende Flächen jeweils zwei im Querschnitt halbkreisförmige Längsnuten (42i) zum Einlegen von Dichtschnüren (44) für eine Abdichtung zwischen einander benachbarten Filterelementen (20F, 20G) eingezogen sind.

*FIG. 1*

FIG. 2

EP 0 388 996 A1

FIG. 3

# FIG. 4

# FIG. 5

# FIG.6

| Kategorie | Kennzeichnung des Dokuments mit Angabe, soweit erforderlich, der maßgeblichen Teile | Betrifft Anspruch | KLASSIFIKATION DER ANMELDUNG (Int CI⁵) |
|---|---|---|---|
| | **EINSCHLÄGIGE DOKUMENTE** | | EP 90108039.0 |
| A | DE - A1 - 2 449 065 (LUFT- UND TROCKENTECHNIK) * Ansprüche * -- | 1 | B 01 D 46/10 B 05 B 15/12 |
| A | GB - A - 1 331 274 (AMERICAN AIR FILTER) * Gesamt * -- | 1 | |
| A | US - A - 2 685 923 (LAWS) * Gesamt * -- | 1 | |
| A | DE - A - 1 507 826 (MODIANO) * Ansprüche; Fig. * -- | 1 | |
| A | DE - A - 1 607 667 (AMERICAN AIR FILTER) * Ansprüche; Fig. * -- | 1 | |

RECHERCHIERTE
SACHGEBIETE (Int CI⁵)

B 01 D
B 05 B
B 05 C
F 24 F

Der vorliegende Recherchenbericht wurde für alle Patentansprüche erstellt.

| Recherchenort | Abschlußdatum der Recherche | Prüfer |
|---|---|---|
| WIEN | 10-07-1990 | BECKER |